# EUROPEAN PATENT APPLICATION

(11) **EP 2 757 515 A1**
(43) Date of publication of application: **23.07.2014**
(21) Application number: 13153761.5
(22) Date of filing: 01.02.2013
(51) Int. Cl.: G06Q 20/38, G06Q 30/02, G06Q 20/20

(54) **A computer system for processing product data**

(30) Priority: 18.01.2013 GB 201300959
(71) Applicant: Sainsbury's Supermarkets Ltd., London EC1N 2HT (GB)
(72) Inventor: Burton, Daniel, Reading, Berkshire RG4 7RE (GB)
(74) Representative: Driver, Virginia Rozanne

(57) **Abstract**

The invention relates to a server for supporting a point of sale transaction, the server comprising: an input for receiving from a point of sale terminal transaction details pertaining to a customer and a second input for receiving update information from an update service; a processing engine arranged to receive the transaction details wherein the transaction details include product data from at least one product, the product data including first price data, including at least a first price for the product, wherein the processing engine is configured to receive second price data from the update information, the second price data pertaining to the at least one product and to compare the first price data with the second price data and issues a voucher request based on the comparison; an update component configured to issue periodic polling messages, and responsive to at least some of said polling messages to receive said update information at the second input, wherein the update information includes at least one of a price file containing the second price data and a configuration file containing configuration parameters for controlling operation of the processing engine.

## Description

The present invention relates to a computer system for processing product data and particularly to a computer system, a method and a computer program product executed in a processor for executing a point of sale transaction.

One of the problems facing retailers today is how to process product data, including price data, so as to keep customers up to date with current price data, offers, discounts, comparisons with competitors, etc.

One way in which product data including price data can be displayed to members of the public in a retail premise, such as supermarket, is to provide labels, either on each product or secured to the shelves where the products are located. In the former case, it is very labour intensive to change the labels when a price change occurs. Moreover, it is difficult to flag discount offers and competitor comparison offers using this system.

When labels are applied to shelves, there can be confusion as to which products are associated with the labels and it is still relatively labour intensive to manually change the labels and keep customers up to date with constantly changing price data.

Digital display systems do exist, whereby price information can in principle be displayed locally in association with products and managed by a central computer system. Such systems are extremely expensive to implement and to-date are not widely implemented in customer oriented retail environments for this reason. Moreover, such systems do not permit a retail outlet to indicate to a customer that their price is intended to match a competitors' price.

One recently introduced solution adopted by some retailers to indicate to customers that they are matching competitors' prices involves a customer, after making their purchases, to access a website of the retailer, to enter information concerning their purchases and to return to the retail outlet concerned if the purchase price of certain products that they have purchased exceeds that of named competitors.

An alternative solution is to provide a point of sale voucher in real time, which indicates the difference between a retail price and a competitor price for the same product. The implementation of such a system creates practical difficulties.

According to one aspect of the present invention, there is provided a server for supporting a point of sale transaction, the server comprising:
an input for receiving from a point of sale terminal transaction details pertaining to a customer and a second input for receiving update information from an update service;
a processing engine arranged to receive the transaction details wherein the transaction details include product data from at least one product, the product data including first price data, including at least a first price for the product, wherein the processing engine is configured to receive second price data from the update information, the second price data pertaining to the at least one product and to compare the first price data with the second price data and issues a voucher request based on the comparison;
an update component configured to issue periodic polling messages, and responsive to at least some of said polling messages to receive said update information at the second input, wherein the update information includes at least one of a price file containing the second price data and a configuration file containing configuration parameters for controlling operation of the processing engine.

The server can contain a storage component arranged to store the second price data, and a storage component arranged to store the configuration parameters. The processing element can be arranged to operate using configuration and price data stored in the respective storage units for a time period exceeding an interval between expected update messages when expected update messages are not received. The configuration parameter can include a timing parameter which sets this time period.

This allows for the possibility of the system in the store to continue operating to deliver vouchers to customers even when there has been some interruption in update messages received from a central service.

The server may be arranged such that the processing engine may also be configured to file at least one of: a minimum coupon value to prevent issuance of a voucher request where the difference between the first price data and the second price data is less than a minimum value, a maximum coupon value to prevent issuance of a voucher request where the difference between the first price data and the second price data exceeds a maximum value, a maximum coupon value per unit time to prevent issuance of voucher requests after a total value of voucher requests issued in that unit time has been reached and a maximum coupons per unit time to prevent issuance of a further voucher request after a predetermined number of voucher requests have been issued.

The server may also be arranged so that its processing unit is configured to compare first price data from multiple items in a customer basket with second price data for corresponding items.

The processing engine could also be arranged to be responsive to a minimum number of items per basket to prevent issuance of a voucher request unless there is a minimum number of items in a customer basket and/or a minimum total basket value to prevent issuance of a voucher request unless a total value of items in a customer basket exceeds a minimum value.

Alternatively, or additionally, the server could have its processing engine arranged to be responsive to a non-loyalty card parameter to arrange for the issuance of vouchers in cases where customers do not present a loyalty card, a pass through mode setting to control whether or not transaction details are supplied to the processing engine or bypass it and an equal message setting to control whether or not vouchers are printed where the first price data equals the second price data.

In accordance with another aspect of the invention there is provided a computer arranged to control a plurality of retail premises by supplying configuration parameters, each retail premises equipped with an in-store server, the server having an input for receiving transaction details pertaining to a customer from a point of sale terminal, the transaction details including product data from at least one product, the product data including first price data including at least a first price for the product, wherein the server includes a processing engine arranged to receive second price data pertaining to the at least one product from a remote server, compare the first price data with the second price data and issue a voucher request based on the comparison, wherein the voucher request is output to a voucher issuing unit, wherein the processing engine is controlled to operate in accordance with configuration parameters, the control computer having a user interface presenting a plurality of configuration parameter fields wherein configuration parameters can be set by a user such that different configuration parameters are settable for different retail premises at a single user interface and including a status parameter which controls whether or not the processing engine operates to generate voucher requests.

Such a control computer provides a significant advantage when controlling a number of retail premises (stores) which are remote from one another. In addition to providing different configuration parameters settable for different retails premises, the control computer can provide through a price file update component differing price files settable for different retail premises. The configuration parameters and/or the price files can be targeted to specific or all:
regions (that is, multiple stores in a similar geographic location), store types (convenience, main, etc), stores (that is specific stores), tills (point of sale terminals), till groups (groups of point of sale terminals, for example, within a store), and till types (model, location, etc).

Another aspect of the invention provides a method wherein the configuration parameters include a status parameter which controls whether or not the processing engine of each retail premises operates to generate voucher requests in conditions set by the status parameter.

The computer may also be arranged such that the configuration parameter fields are configured to accept a configuration parameter of at least one of: a minimum coupon value to prevent issuance of a voucher request where the difference between the first price data and the second price data is less than a minimum value, a maximum coupon value to prevent issuance of a voucher request where the difference between the first price data and the second price data exceeds a maximum value, a maximum coupon value per unit time to prevent issuance of voucher requests after a total value of voucher requests issued in that unit time has been reached, a maximum coupons per unit time to prevent issuance of a further voucher request after a predetermined number of voucher requests have been issued, a minimum number of items per basket to prevent issuance of a voucher request unless there is a minimum number of items in a customer basket, a minimum total basket value to prevent issuance of a voucher request unless a total value of items in a customer basket exceeds a minimum value, a non-loyalty card parameter to arrange for the issuance of vouchers in cases where customers do not present a loyalty card, a pass through mode setting to control whether or not transaction details are supplied to the processing engine or bypass it and an equal message setting to control whether or not vouchers are printed where the first price data equals the second price data.

A further aspect of the invention provides a computer system for issuing vouchers, the computer system comprising:
an in-store server located at a retail premises, the server having an input for receiving transaction details pertaining to a customer from a point of sale terminal, the transaction details including product data from at least one product, the product data including first price data including at least a first price for the product, wherein the server includes a processing engine arranged to receive second price data pertaining to the at least one product from a remote server, compare the first price data with the second price data and issue a voucher request based on the comparison, wherein the voucher request is output to a voucher issuing unit; and
a remote server connected to the in-store server over a communication network, the remote server connected to receive transaction details from the point of sale terminal and having a processing component arranged to compare the first price data with the second price data and to generate voucher request data which identifies the nature of vouchers resulting from the comparison of the first price data with the second price data for each customer transaction.

The in-store server can be arranged to transmit to the remote service audit data including voucher request data for comparison with the voucher request data generated at the remote server. This can be used to assess correct operation of the in-store servers. In addition, the architecture provides a failover feature wherein the transaction details include a customer identifier of the customer and wherein in the voucher request data includes voucher requests associated with the respective customer identifiers. In such a case, the remove server can provide a user interface operable to receive a customer identifier, to ascertain from the voucher request data whether a voucher request associated with the customer identifier was effective to generate a voucher and if it was, to generate instructions for a voucher issuing unit located at the retail premises to issue a voucher on detection of that customer identifier in a subsequent transaction. This provides a "failover" function.

This means that a promise to customers for the issuance of vouchers can be honoured even in cases where there is some disturbance to operation in-store.

Customer identifiers can also be used to allow a customer to see how their coupon was calculated immediately after their transaction has taken place using an interface available to the public which will accept their customer identifier, for example, based on a loyalty card scheme.

The first price data can be a single price or the sum of first prices for multiple products purchased by the customer. In the latter case the first price data is compared with a sum of second prices of multiple comparable products from one or more competitor.

In one embodiment, the voucher issuing unit comprises a printer operable to print the voucher responsive to the voucher request. The printer is ideally located at the point of sale, such that a customer receives immediately a printed voucher having a value relating to the difference between the first and second price data for products which they have purchased. Thus, if a customer purchases products which are more expensive than a competitors', the computer system of the present invention automatically issues that customer with a voucher for the difference in price, at the point of sale of the retailer. This is thus much simpler for a customer.

The voucher can be associated with a redemption authentication element, such as a barcode, e.g. printed on the face of the voucher.

As an alternative to printing the voucher, the voucher issuing unit can be operable to store the voucher to an electronic memory associated with a customer, such as a data card. That data card could be a loyalty card or similar, and could entitle the customer to other coupons in addition to the difference voucher. To achieve this, messages are conveyed in the embodiment via a relay unit in the in-store server from the POS terminal to the voucher issuing unit.

As an alternative to printing a voucher or storing the voucher to an electronic memory, the voucher issuing unit can be operable to generate a message to a remote device (e.g. customer-owned mobile device), the message including the voucher. The remote device can be: a customer owned mobile device; a web server hosting a website; and a customer email account. A message could alternatively be generated for transmission to a web server hosting a website or a customer email account. In each case, addressing and formatting of the message can be handled at the voucher issuing unit responsive to the voucher request.

In some embodiments, the computer system can include a remote server which is operable to obtain second prices for a plurality of products from one or more competitors and to provide said second prices to the in-store processing engine. Such a remote server can collect and update prices in real time or periodically throughout the day.

In some embodiments, this is responsive to polling messages (heartbeats) from the in-store server.

In some retail units, a voucher issuing unit (for example, in the form of a printer) may already be present for printing other types of vouchers, such as discount vouchers, etc. In that case, it is advantageous if the processor is arranged to issue the voucher request in a data stream supplied from the processor to the voucher issuing unit, the data stream including transaction data representing transactions conducted by the customer at the point of sale terminal.

This can be achieved in accordance with an aspect of the invention which provides a computer system located at a retail premises for executing a point of sale transaction comprising:
a point of sale terminal having an interface for receiving product data from at least one product purchased by a customer, the product data including a first price for the product, and a message generation unit operable to issue messages containing said first price data addressed to a voucher issuing unit;
a server arranged to execute a computer program which receives said messages from the point of sale terminal, and second price data pertaining to the product, the second price data being from a remote source, compares the first price data with the second price data and issues a voucher request based on the comparison of the first and second price data,
wherein the point of sale terminal is configured to address messages intended for the voucher issuing unit to the server and wherein the server comprises a relay unit which supplies those messages to the voucher issuing unit in a message stream which includes voucher requests issued by the computer program;
the computer system further comprising a voucher issuing unit arranged to receive the messages and voucher requests, to automatically provide a voucher to the customer responsive to the voucher request and to automatically generate a coupon responsive to the messages.

A particularly useful element of the architecture is the format of messages generated by the price comparison engine as inserted into the message relay component. The point of sale terminal generates USM messages which convey coupon information intended for the voucher issuing unit. The format of these messages has been modified to implement the present system by changing source and destination identifiers in the message to ensure that they are directed to the in-store server which relays them to the voucher issuing unit. This allows all existing messages generated by the point of sale to be conveyed to the voucher issuing unit. In addition, the price comparison engine can send additional messages to the voucher issuing unit for printing coupons or vouchers as described herein.

Another aspect of the invention provides a method of issuing vouchers for a point of sale transaction at a retail premises, the method comprises receiving at a point of sale terminal transaction details of at least one product purchased by a customer, the transaction details including product data including first price data pertaining to the product, the point of sale terminal issuing messages containing the transaction details to a server,
the server receiving said messages from the point of sale terminal and selectively supplying the messages to a processing engine and/or a relay unit, the processing engine comparing the first price data with second price data pertaining to the product received from a remote source and issuing a voucher request based on the comparison of the first a second price data when predetermined conditions are met,
when voucher requests are issued, supplying them to the relay unit and the relay unit supplying messages to the voucher issuing unit in a message stream which includes any voucher requests issued by the processing engine.

The "pass through" mode defined above wherein messages can selectively be supplied directly to the relay unit and bypass the processing engine can be set using configuration information supplied from a remote source to the server at the retail premises.

The invention provides in a further aspect a method of issuing vouchers having fail over tolerance, the method comprising:
at an in store server located at a retail premises conducting a price comparison between first price data of a product purchased by a customer at a point of sale terminal and second price data pertaining to the product received from a remote source and issuing a voucher request based on the comparison, wherein the voucher request is output to a voucher issuing unit;
supplying transaction details including product data from the at least one product to a remote server over a communication network, the remote server also comparing the first price data with the second price data and generating voucher request data which identifies the nature of vouchers resulting from the comparison of the first price data with the second price data for each customer transaction.

When the customer transaction is associated with a customer identifier, for example through a loyalty card scheme, the remote server can operate responsive to receipt of that customer identifier, for example through a user interface, to ascertain from the voucher request data whether a voucher request associated with the customer identifier was effective to generate a voucher, and if it was to generate instructions for the voucher issuing unit located at the retail premises to issue a voucher on detection of that customer identifier in a subsequent transaction.

It will be apparent that the instructions can be directed to the same voucher issuing unit or to another voucher issuing unit which would respond to the same customer identifier.

For a better understanding of the present invention and to show how the same may be carried into effect, reference will now be made to the accompanying drawings, in which:
Figure 1 is a schematic diagram;
Figures 2 and 3 show alternative voucher issuing units;
Figure 4 is a block diagram of a network system;
Figures 5a and 5b are schematic block diagram of a prior art comparison system;
Figure 6 is a detailed diagram of a system architecture;
Figure 7 is a schematic diagram showing operation of the architecture;
Figure 8 is a screenshot indicating store-by-store status;
Figure 9 is a screenshot of a user interface for a failover function;
Figure 10 is a screenshot of a price comparison interface;
Figures 11 and 11a are screenshots for entry of configuration parameters;
Figure 12 is a screenshot for management information (MI);
Figure 13 is a flow diagram illustrating operation on enterprise data warehouse files;
Figure 14 is a structure of a polling message;
Figures 15a and 15b are a flow chart showing operation of the processing engine;
Figure 16 illustrates message flow between components of the system; and
Figure 17 is a diagram of networked stores.

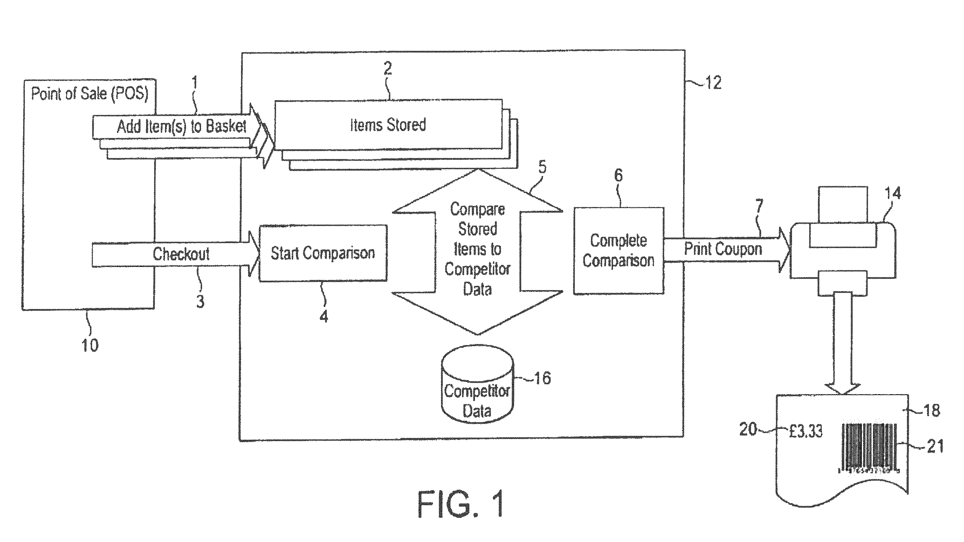

Figure 1 is a schematic diagram of one embodiment of the present invention. A computer system comprises a point of sale terminal 10, a server 12 and a voucher issuing unit 14 including a printer 14. The point of sale terminal comprises a device for scanning barcodes of products as they are purchased by a customer, the barcode indicating product data including price data. As each item is scanned, product data for the item is supplied from the point of sale terminal 10 to the server 12 as denoted by arrow 1 in Figure 1. As denoted by block 2, messages denoting the product data of purchased items are stored as a transaction at a memory in the server 12.

When the customer performs a checkout, as denoted by arrow 3 (that is they pay for all the purchased items), a transaction complete message is sent to the server 12. As denoted at block 4, the server 12 then operates to compare price data of the customer's purchased items with price data of comparable items from competitors. Such price data is held in a database 16 at the server 12. The comparison function is indicated by the double-headed arrow denoted by 5 in Figure 1. When the comparison has been completed, and if it has been determined that a competitors' total transaction value is cheaper (see block 6), a voucher request is issued denoted by arrow 7, the voucher request including information defining the difference between the customer purchase price and the competitors' price of the comparable items. The voucher request is received by the voucher issuing unit in the form of printer 14 which acts to print a voucher 18 having a face value 20 matching the value of the difference. The printed voucher 18 can also include a barcode 21 which identifies the voucher as a difference voucher to distinguish it from other types of voucher that might be generated at the voucher issuing unit 14.

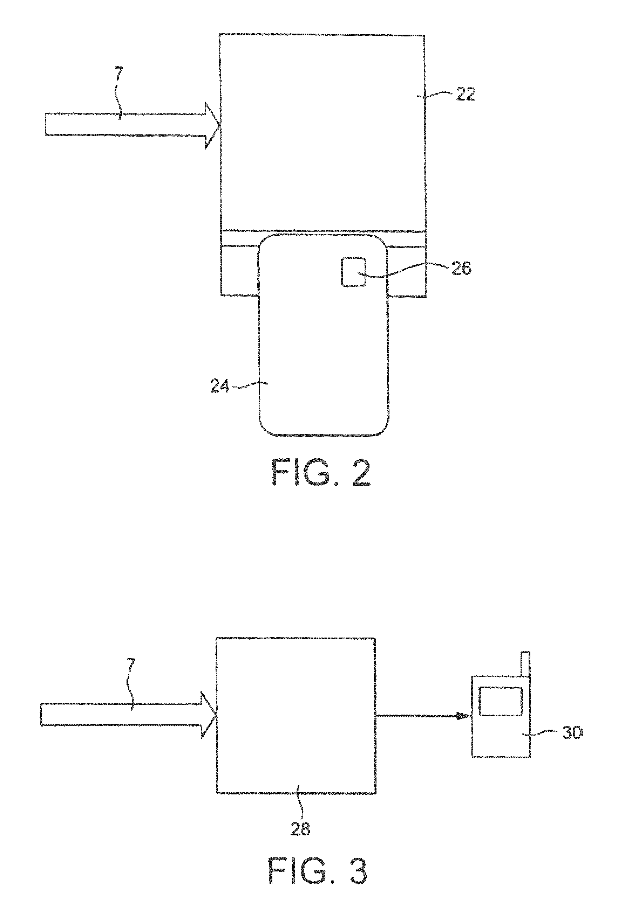

As shown in Figure 2, an alternative to the printer 14 for the voucher issuing unit can be a mechanism for receiving a data card 24 associated with the customer. The data card 24 can include an electronic memory 26. In this way, if the data card 24 is inserted into the device 22, responsive to the voucher request a discount voucher can be loaded onto the card 24 by being stored into the electronic memory 26. A suitable data card could be a smart card, or loyalty card.

In a further embodiment shown in Figure 3, the voucher issuing unit takes the form of a device 28 which receives the voucher request 7 and can issue a wireless signal to a customer mobile device 30.

Although not necessarily evident from Figure 1, the voucher issuing unit in the form of printer 14 or card reading device 22 can be located at the point of sale terminal 10. When the card reading device 22 is present, a customer identifier can be read from the data card associated with the customer during the transaction, and this can be inserted into the voucher request. In this way, the voucher can be associated with the customer identified by the customer identifier. Other methods of inputting the customer identifier at the point of sale terminal are possible, for example, an operator could key in the customer identifier.

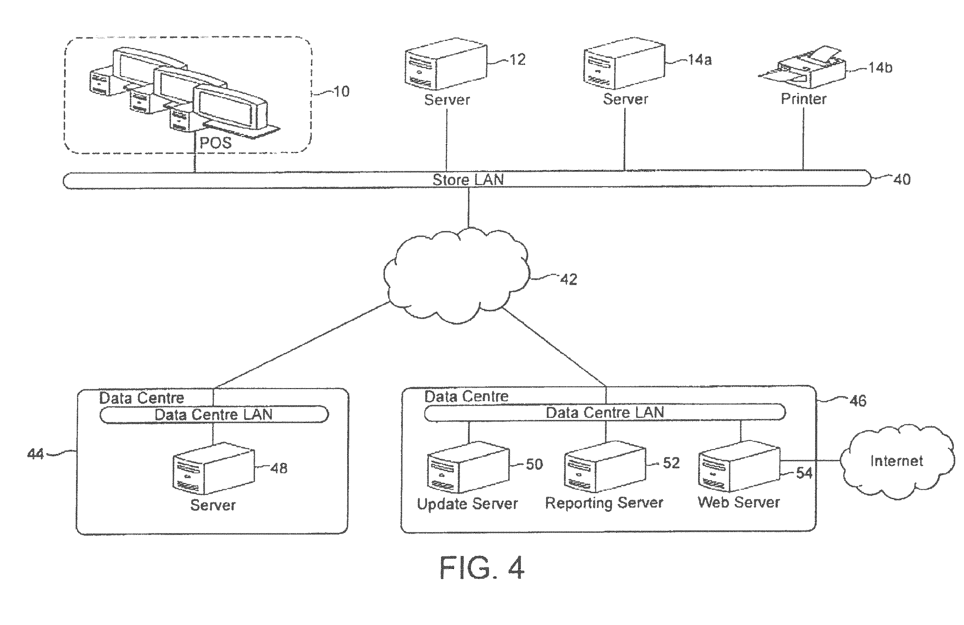

Figure 4 is a schematic diagram of a networked system within which the computer system according to embodiments of the present invention can be implemented. Figure 4 illustrates the point of sale terminal 10, the server 12 and the voucher issuing unit 14 connected to a local network within a store/retail premises 40. It will be appreciated from Figure 4, that the voucher issuing unit 14 comprises a local server 14a and printing device 14b. The local network 40 is connected via a communications network, for example, the Internet or a cloud-based network 42 to a retailer data centre and a price-data data centre. The retailer data centre 44 comprises a real time server 48. The price-data data centre 46 comprises an update server 50, a reporting server 52 and a web server 54. The components of the system shown in Figure 4 have the following functions.

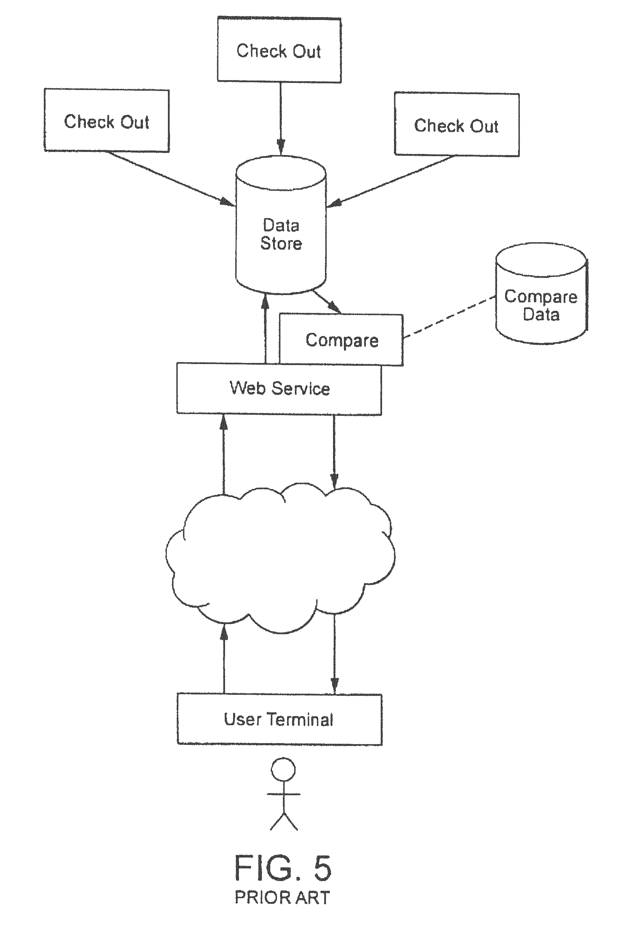

In Figure 5, a plurality of checkouts is illustrated, each representing the checkout function of a particular store. Each time a customer checks out, their transaction data is supplied to a centralised data store. If a user wants to make use of the comparison function, which his indicated diagrammatically by the block labelled "compare", he accesses a user terminal with Internet connectivity to call up a web service which has access to the compare function and the data store. The compare function operates on data supplied by the customer at the point of checkout, which is transmitted to the data store, and compare data which is derived from competitor's products and updated on a regular basis.

This arrangement has a number of disadvantages. A user can only use a compare function if they have access to a user terminal with web connectivity. Furthermore, they must move from the checkout to that user terminal (wherever it is located) and enter their information in order to access the compare function via the web service. Therefore, one problem is that without access to a user terminal with Internet connectivity, a customer cannot take advantage of the service.

Another problem is that if Internet connectivity is lost, a user cannot access the service. Moreover, if the data store goes down, then the service becomes inoperable.

As already explained with reference to Figure 1, the point of sale terminal accepts customer transactions and transmits them to the server 12, via the local network 40. Price data is supplied to the server 12 from the update server 50 in the price-data data centre 46.

The server 12 compares transactions at a basket level with competitor pricing, and as described above if a positive difference exists, then the server updates data sent to the server 14a of the voucher issuing unit, instructing that a specifically valued voucher be printed. The server 14a accepts the transaction details, the number of any customer loyalty card, data from the server 12 including difference price data and actuates the printer 14b to print vouchers accordingly. The web server 54 is public facing and can be used for record checking and customer care centre queries. The server 48 at the data centre 44 can allow a customer care centre to check the status of printed and non-printed vouchers. The reporting server 52 can receive audit data from the server 12 and database requests from the web server 54 so as to reconcile audit data from the in-store server 12. It will be appreciated that there could be multiple servers 12 within a store. In that case, audit data can be reconciled across the multiple servers.

Data which is supplied to the server 12 from the server 50 at the price-data data centre 46 can be obtained in a number of different ways. For example, the server can be linked to a number of client terminals at which data is entered, or it can be supplied directly to the server from researchers and price monitors, etc. The ability of a data centre to extract data on prices of competitors' products is known and so is not discussed further herein.

In one embodiment of the invention, the difference vouchers are used in a system which already prints other kinds of discount vouchers using the server 14a and printer 14b. In that case, transaction data from the point of sale terminal which is supplied to the server 14a and printer 14b can be in the form of a data stream which includes the voucher request.

The nature of products on which the price comparison is to be effected, can be determined at the update server 50 of the data centre 46 and/or by the retail operator and managed at the server 12.

Embodiments of the invention described above provide significant advantages with respect to the prior art as illustrated for example, in Figure 5. A first advantage is that a voucher is printed for the customer in real time while they are still at the checkout of the store. Thus, a customer does not require access to a user terminal with Internet access, nor do they have to wait to receive their voucher.

A second advantage relates to the architecture of the system. The comparison function is carried out by a server 12 within each store. Thus, if for some reason the comparison function is rendered inoperable or out of order, only one store (or the parts of the store affected by that server) are affected - customers in other stores are able to continue to receive the vouchers. Due to the centralised nature of the function as illustrated in the architecture of Figure 5, if it is rendered inoperable then the system of Figure 5 is inoperable across all stores.

Furthermore, competitor price data is held locally in database 16 at the server 12. If this database is rendered inoperable, once again, this affects only one store or the parts of that store served by that server. The database 16 receives competitor data on a periodic basis from the update server 50 in the price data centre 46, for example, via the Internet 42. If for any reason the update server 50 becomes inoperable, the local server 12 within the store can continue to function based on the last data which it received and held at its local database 16. Thus, a function can be maintained for a short time even after the price data centre 46 does down. Once again, this is in contrast to the effect of a breakdown in the data store in the architecture of Figure 5. It would be possible to put in place a rule whereby the period of time over which vouchers continue to be issued on old data is limited to a certain amount.

As the compare and voucher issue function are handled locally within the store, the limit on the number and/or value of difference vouchers can be set within the store and thus can vary store-by-store to take into account differing customer profiles in different locations.

Another advantage arising from the architecture is that the system can be "dark launched". That is, all parts of the system can be rendered operable apart from the print function. Instead, the server can provide information on operability of the system for example, in its periodic updates to the data centre 46 such that it can be determined whether or not the system is functioning properly before the printer is connected and caused to operate.

The architecture of Figure 5 does not permit such a "dark launch".

While the above-described embodiments of the invention are focussed on an in-store environment, it will be appreciated that the principles can be extended to on-line purchases.

In the preferred embodiment, the value of the voucher shall be calculated by comparing the total value (price data) of items in a basket of a customer transaction with the total value of comparable items as priced by competitors. However, it would be possible in principle to effect the comparison on an item-by-item basis.

The competitor could be a single competitor, or multiple competitors as determined either by the update server 50 or the server 12.

The value comparison could be applied to a minimum number of comparable items in a customer transaction to qualify for a difference voucher. The minimum could be set at one or more items. This refers to the minimum number of comparable items purchased by a customer, rather than the minimum number of items in a transaction. The system can include an ability to set a limit on the number and/or value of difference vouchers that are issued to customers in a given store within a certain time period, for example, one hour.

It is possible to set maximum and minimum values for the face value of the difference voucher.

It is possible to set the system so that a difference voucher is only issued if a total basket value reaches or exceeds a certain amount. The server 12 is capable of transmitting periodic updates on key information from stores to the data centre 46. It is possible to adjust when and how often an update is issued. The update can include the following:
1. whether the server is still running
2. the number and value of vouchers that have been issued by store and per hour
3. whether the threshold on the limit of vouchers that can be issued in a store within a certain time period has been met. Once this threshold has been met, the system can:
   (a) trigger an automatic switch that prevents the printing of further vouchers;
   (b) send an automatic alter to an agreed contact list warning them that the threshold has been met and that no further vouchers will be printed; and
   (c) continue to keep a record of all vouchers that have not been printed.

The server keeps a record of what messages have been sent to the server 14a at the voucher issuing unit so as to record which transactions have been received, which of these transactions were eligible for a difference voucher and what other types of vouchers were sent for printing.

If there is a failure to print a voucher in real time at the point of sale transaction for any reason, a next time solution is available. In place of real time, next time shall process all relevant transactions and issue a voucher for customers to collect from a subsequent visit to a participating retail outlet. The next time solution keeps a record of all transactions for a given time period, for example, for two years, although it is possible that vouchers will only be issued to customers within a certain period (for example 28 days) after their original transaction.

Thus, embodiments of the invention provide a system that provides comparison based discount vouchers that are printed as part of a customer transaction, processed by an engine. As customer items are scanned, messages are sent to the engine, where they are stored as a transaction. When the customer performs a check-out (i.e. pays for their items), a transaction complete message is sent to the engine. The engine then compares the customer's items with comparable items from competitors. If a competitor's total transaction value is cheaper, then a discount voucher matching the value of the difference will be printed in real-time. The system can compare promotions, including multi-buy purchases. Alternatively, or additionally, the system can compare multiple competitors at the same time. It is also possible to print a "negative voucher" or "equal voucher" showing the customer how much they saved in their transaction.

The term "voucher" has been used above in the context of providing information to a customer concerning price comparisons. It will readily be appreciated that the term voucher is not restricted to a voucher which matches the value of the difference such that a customer can use it in subsequent transactions in place of money. As mentioned above, another possibility is a "negative voucher" or "equal voucher" showing the customer how much they saved in their transaction. This is more in the form of a printed message than what would generally be understood as a "voucher" in the trade. Similarly, the printed message can state that the customer's shop was no more expensive ("equal voucher").

It will further be appreciated that the term "electronic memory" used herein may be implemented as an electronic record or electronic storage device.

It will further be appreciated that customer loyalty data could be stored on a card or a central customer database or a specific loyalty system.

It will be appreciated that the database 16 can take any suitable form, including any type of appropriate memory data store.

It will be appreciated that each of the components mentioned above could be implemented by any suitable computer executing a computer program, or in hardware or firmware as appropriate. In particular, reference to a server is not intended to be restrictive: any suitably implemented processor with associated memory for holding an executable computer program would suffice.

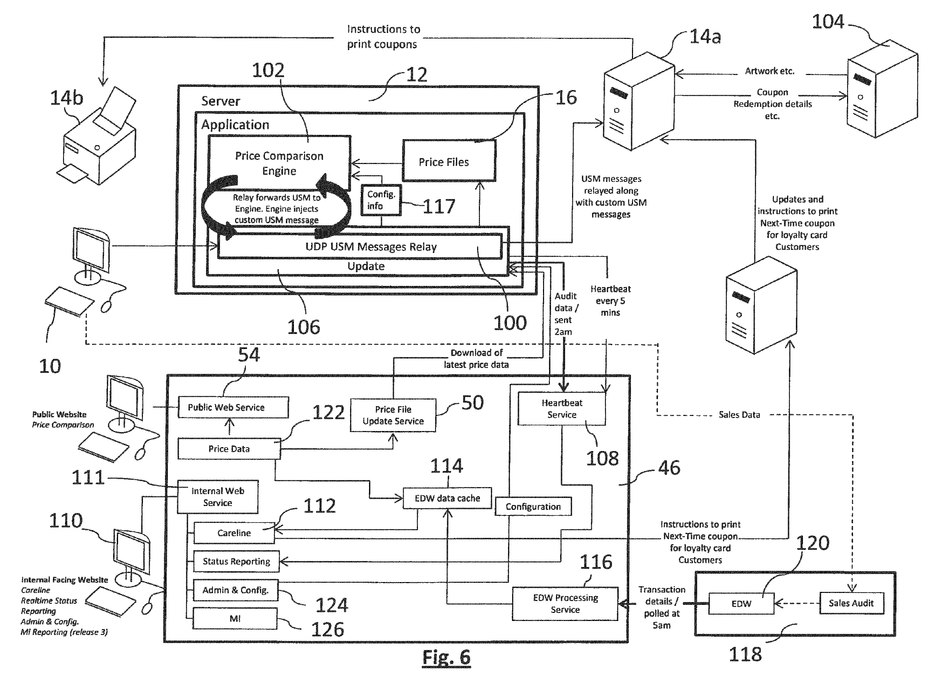

Figure 6 is a diagram giving a high level overview of a modified version of the architecture described above. In common with the architecture described above, the server 12 hosts a price comparison engine 102. The server 12 is located between the point of sale 10 and the voucher issuing unit 14. The voucher or coupon based on the price comparison is "injected" into a stream of transaction data supplied from the point of sale 10 to the voucher issuing unit 14. This is a particularly useful architecture where the voucher issuing unit is already present for printing other types of vouchers based on data from the point of sale terminal 10. That is, consider a scenario where the server 12 is absent. An existing infrastructure could comprise the point of sale terminal 10 outputting USM (User-based Security Mode) messages intended to be directed to the server 14aA of the voucher issuing unit 14. In order to incorporate the server 12 in this architecture, the point of sale terminal 10 is configured to a header to the messages so as to direct them to the server 12. As explained in more detail later, a message relay component 100 is responsible for relaying these messages to the voucher issuing unit 14. In addition, voucher requests generated by the price comparison engine 102 are injected into the data stream by transfer into the message relay component 100. Thus, both "normal" messages (which would have been addressed to the voucher issuing unit even in the absence of the server 12), and voucher requests generated by the server 12 form part of the same data stream to the voucher issuing unit 14. The injection of voucher requests as custom USM messages into the message stream is illustrated by the bold arrow to the price comparison engine 102. The relay 100 forwards USM messages to the price comparison engine (bold arrow in the opposite direction), the USM messages containing transaction data, including price data.

As the server 12 runs on constantly updated data, it does not need to be backed-up and can be rebuilt or swapped-out in the event of a failure.

Figure 6 illustrates message flows using thin arrows. The darker thin arrows correspond to delayed messages whereas the lighter thin arrows depict instant messages. UDP (User Datagram Protocol) USM transaction messages are supplied from the point of sale 10 to the message relay component 100 located in the server 12. The message relay component forms part of an application executed on the server which provides the price comparison engine denoted 102 in Figure 6. The message relay component 100 supplies USM messages to the voucher issuing unit 14, specifically to the server 14a. These messages include messages from the point of sale unit 10 for "normal" vouchers and coupons of the type which would formerly have been addressed directly to the voucher issuing unit (in the absence of the server 12), and messages for the vouchers and coupons in accordance with embodiments of the present invention, based on price comparison data. The in-store server 14a of the voucher issuing unit supplies to an external server 104 coupon redemption details which relate to "normal" vouchers or coupons. It is to be noted that vouchers based on price comparison data do not have to be supplied to the external server 104, but can be supplied directly as instructions to print coupons to the printer 14b. As explained above, the server 12 has been introduced into the normal message flow between the point of sale 10 and the in-store server 14a of the existing voucher issuing unit. The point of sale 10 has been modified to send its UDP messages to the server 12 instead of to the server 14a as it would have done previously. The server processes all the messages and passes them onto the voucher issuing unit, including voucher requests based on price comparison data.

Instructions to print "normal" vouchers can be returned from the external server 104 and also supplied to the printer 14b, responsive to the coupon redemption details.

Instructions to print vouchers based on voucher requests can be supplied to the voucher issuing unit as described above, or alternatively, could be supplied to a printer associated with the till where the transaction takes place, a printer associated with another till or the receipt printer.

An update component 106 is also provided in the server 12 which contains the price comparison engine. The update component can be part of the application (program code) which delivers to the price comparison engine. The update component receives downloads of the latest price data on a periodic basis from the price file update server 50 at the data centre 46, or in response to a request issued by the update component. The update component is also responsible for receiving configuration data and software updates. The update component 106 supplies a poll message, herein termed a "heartbeat", at a reasonable periodicity, for example, every five minutes, and also supplies audit data for example, overnight. The request for new price data can be conveyed in a "heartbeat". Having received the latest competitor price data from the price file update service 50, the updater 106 stores the latest competitor price data in a price file database 16.

The price comparison engine 102 operates to compare price data of the customers purchased items with the price data of comparable items from competitors stored in the database 16. The price comparison engine 102 may be configured according to one or more pre-determined rules. For example, the price comparison engine 102 may conduct the price comparison in accordance with rules relating to for example, certain products, categories of products, or product promotions. Furthermore the price comparison engine 102 may be configured to conduct the price comparison or not based on certain rules, for example based on a determination as to whether the customer has a loyalty card.

By way of the update component, the server 12 communicates with the data centre 46 to receive price file updates, configuration data and software updates, and to upload audit and reporting data.

The specific data flows between each item are pointed out herein:

### The point of sale 10 and the server 12

UDP USM messages for each basket item. As each item is scanned at the point of sale 10 a UDP message is sent to the server 12 with product data including price data.

### Server 12 to server 14a

The server 12 passes on the UDP USM messages to the server 14a as it receives them. In addition, they are supplied to the price comparison engine 102. When it receives an "end of transaction" message, it enacts a price comparison and generates and sends a UDP USM discount message (voucher request) if applicable. As described in more detail in the following, a voucher request can be in the form of a discount voucher, or in the form of an equal voucher or "cheaper" voucher. Thus, in each possible scenario resulting from the price comparison a voucher is generated allowing for an insight into correct operation of the system.

### Server 12 to data centre 46

The server 12 sends a heartbeat message to the data centre 46 every four to-five minutes giving the status of the price comparison engine 102 and transaction statistics. The server 12 also sends overnight audit data to the data sender 46 with statistics for the day.

### Data centre 46 to server 12

The data centre 46 sends updated competitor price files to the server 12 overnight. It will be appreciated that there is a server 12 deployed in each retail store, and that these price files, configuration information and software are sent to all of these servers. The software can provide an updated comparison engine. Remote desktop access 110 is provided so that the data centre can provide third party support for the price comparison engine 102. All data sent from the data centre 46 to the server 12 is initiated by a poll mechanism based on the heartbeat messages sent from the server 12. A heartbeat service 108 of the data centre 46 monitors the heartbeat messages. As discussed in more detail later, the configuration information can be set on a per store basis. In addition, on receipt of a heartbeat message the data centre 46 determines if a new price file or updated configuration information or software is available, and if so, sends that.

### Monitoring

The application on the server 12 which provides the price comparison function generates data for monitoring and reporting purposes. The application contains business critical settings which are set within a registry, for example, a registry provided by Windows, which can be monitored by a system agent so that any deviations from the expected can be notified. The system agent is used to monitor critical business values of the application for any deviance from the norm. An event agent is configured to select critical events and to notify these to an administrator. A performance agent is used to report and monitor on financial business values - thresholds will be set if these values reach critical levels. Web reporting software is used to generate reports based on the values gathered by the performance agent. A management portal is used to present all business information to application support teams and business users as required. This can be achieved using the internal facing website denoted by reference numeral 110 in Figure 6.

### Failover Function

A customer service function, referred to herein as "careline", is provided as part of an internal web service at the data centre 46. The careline function 112 is supplied with enterprise data warehouse (EDW) data from a data cache 114. An EDW processing service uploads data to the data cache 114. The EDW processing service is supplied with transaction details on a periodic (for example, daily) basis from a central function 118 managed by the owner of the store. An EDW database 120 receives transaction details which are supplied overnight from each store from the points of sale 10 (see the dotted arrow in Figure 6). Once the end of day processing has been completed and all sales data has been imported into the EDW database 120, a scheduled extract produces a subset of the data required by the data centre 46. The EDW extract is polled by the data centre 46 from the function 118.

The EDW processing service 116 provides a useful failover option which allows a voucher to be printed at a subsequent visit if for any reason it was not possible to print a voucher for a customer in real time. This is described in more detail later.

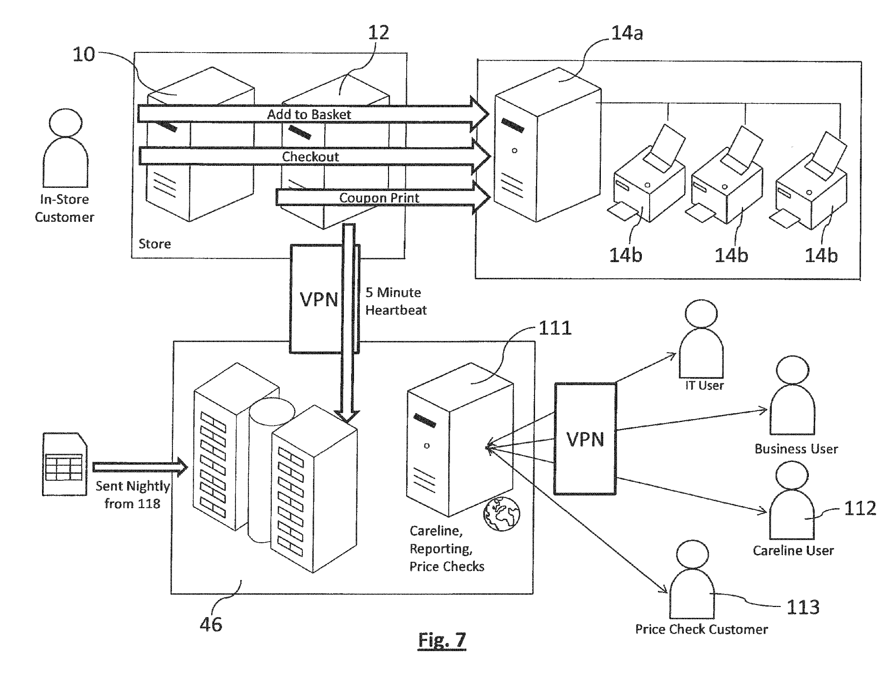

Figure 7 shows a simplified overview of the service.

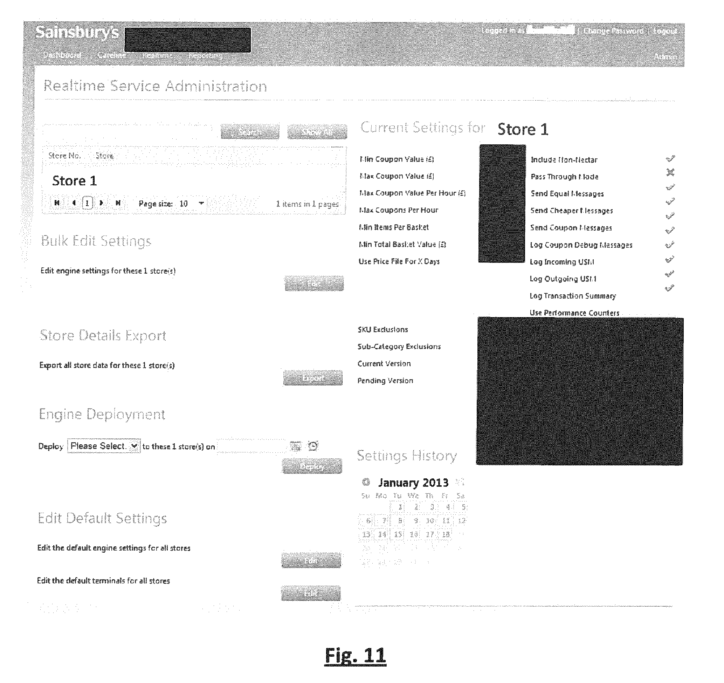

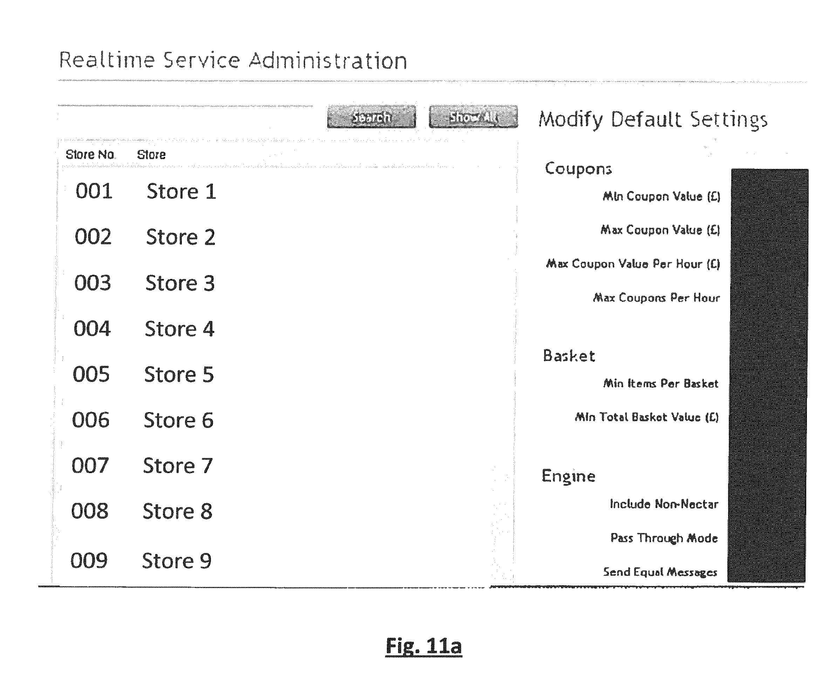

The system implements at the internal web service in the following websites:
a web application framework responsible for unified log-in to all services and user management and role assignment (IT user);
a configuration site 124 for administering service properties (see Figure 11);
a public price check website 113 (price check customer);
a careline website 112 (careline user); and
a real time reporting website (business user).

The internal web service 111 provides authorised users access to a website to perform various functions. A careline component 112 is provided as part of the internal web service 111. The careline component 112 is arranged to receive the EDW data from the data cache 114. The careline component 112 allows authorised users to view transaction data on a per transaction basis and control the issuance of a further voucher for a particular customer the next time the customer makes a transaction at the retail premises, for example an authorised user may see that a customer has used a loyalty card for a transaction and control the issuance of a further voucher when a subsequent transaction is made. The internal web service 111 also provides an administration and configuration component 124. The internal web service 111 also provides a management information (MI) interface component 126.

The third party data centre 46 also provides a public web service 54. The public web service 54 provides a price comparison website which is accessible by members of the public. The price comparison website enables customers to search for products and see the price of a product set by the retailer implementing embodiments of the present invention and set by competitors. The price comparison website further enables customers to see the price of products (set by the retailer implementing embodiments of the present invention and set by competitors) at any time within a given period, for example over the last 28 days.

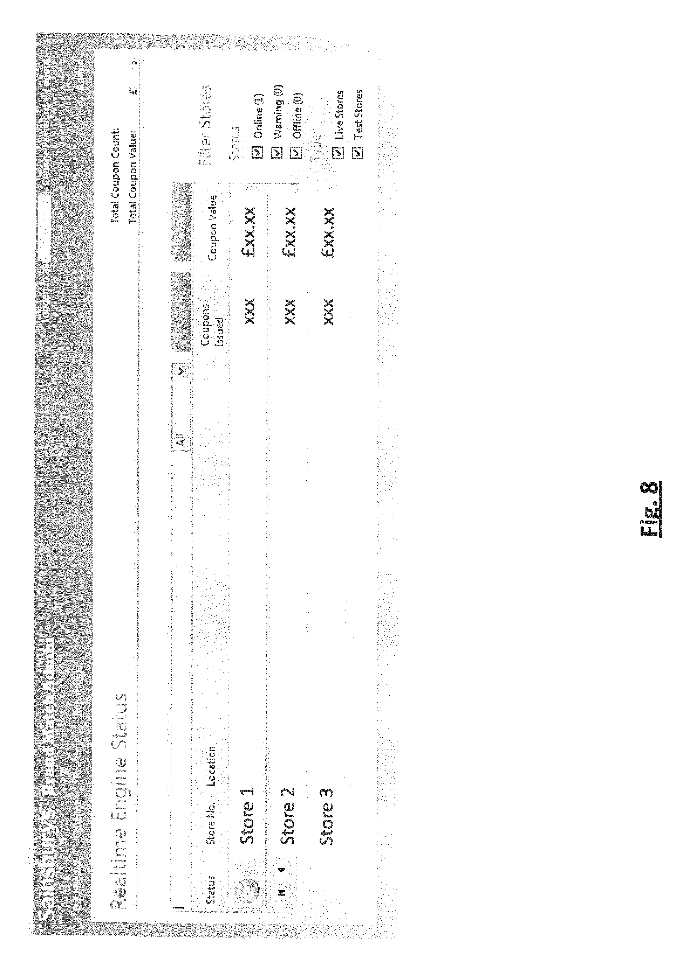

Figure 8 is a screenshot of a real time reporting website. The screenshot provides columns denoting the status of the price comparison engine on a store-by-store basis. A status column denotes whether the engine is active or not. This is particularly useful in the context of activating and/or deactivating the system on a store-by-store basis. Thus, this augments the "dark launch" feature discussed earlier. A store number denotes the number of each store. A location identifies the location of each store. A coupons issued value denotes the number of coupons issued in that store over a certain period. A coupon value indicates the total number of coupons issued for that store. There is also the possibility of including historical coupon data.

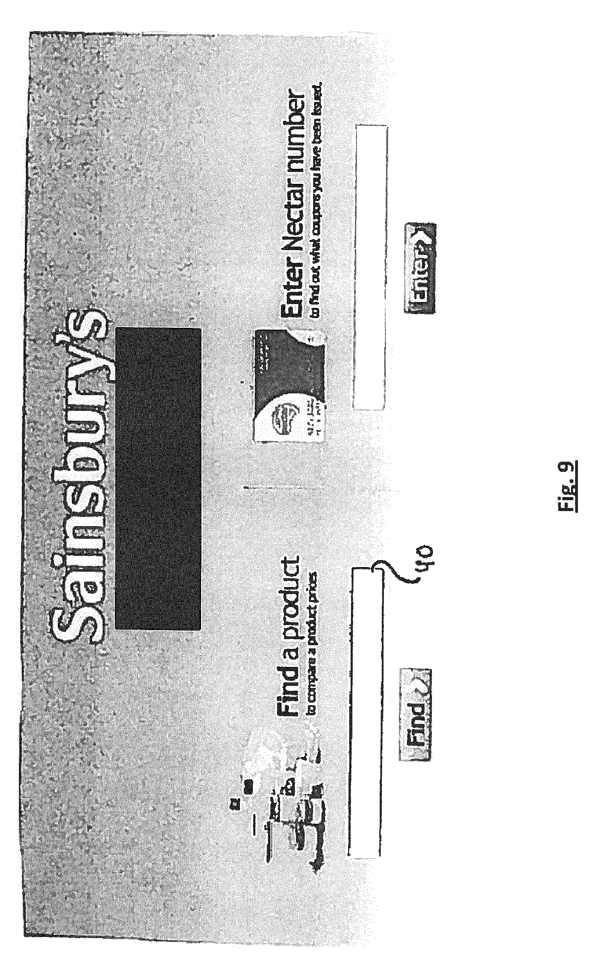

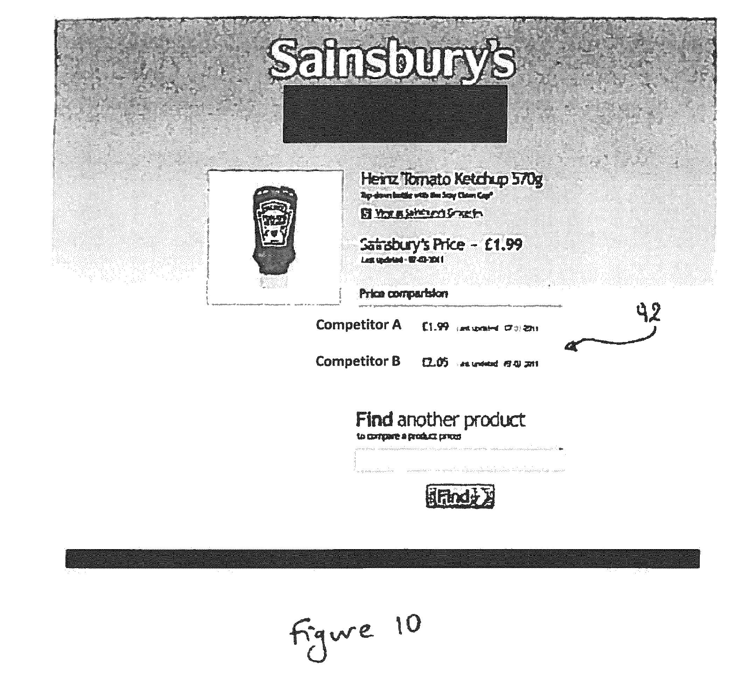

Figures 9 and 10 are screenshots for public price check websites. Figure 9 illustrates two possibilities for a customer, a "find a product" possibility and a "enter Nectar number" possibility. Nectar denotes a loyalty card scheme for the store. Customers are issued with a loyalty card which includes a customer ID and/or loyalty card number. If supplied to the point of sale, this allows transactions to be linked to customers so that voucher requests can be associated with particular customers.

If a product is identified in the "find a product" option, the screenshot shown in Figure 10 will identify the price for the store and competitor prices for selected competitors, based on the competitor data 16. This is shown in Figure 10. The public price check websites operates by supplying product data entered into field 90 to the competitor data 122 held at the data centre 46. The price comparison data associated with the product is returned for display on the screen as shown in Figure 10 at item 92.

Figure 11 shows a configuration website screenshot. This is generated by the administration and configuration function 124. This allows a number of parameters to be configured which control the issuance of voucher requests from the point of sale. The parameters include:
minimum items per basket to qualify;
minimum number of comparable items (that is, items for which price comparison data is available);
maximum number of a single (same) item;
minimum coupon value;
maximum coupon value;
maximum value of all coupons per loyalty card, per calendar month (or other suitable period);
coupon-able amount roundup value;
any excluded promotions.

Herein the "coupon value" is the amount shown on the face of the voucher which would indicate that a refund was payable to a customer based on the price difference. While it would in principle also be possible to set minimum and maximum coupon values for situations where a competitor product is more expensive than the store price, this is not deemed generally appropriate or necessary from a business point of view. A user can utilise the fields displayed on the screenshot shown in Figure 11 to set a parameter for each configurable item. These parameters are supplied to the price comparison engine which takes them into account when conducting its price comparison and deciding what type of voucher request to issue. Figure 11a illustrates how this is done for a selected store - the Stratford store.

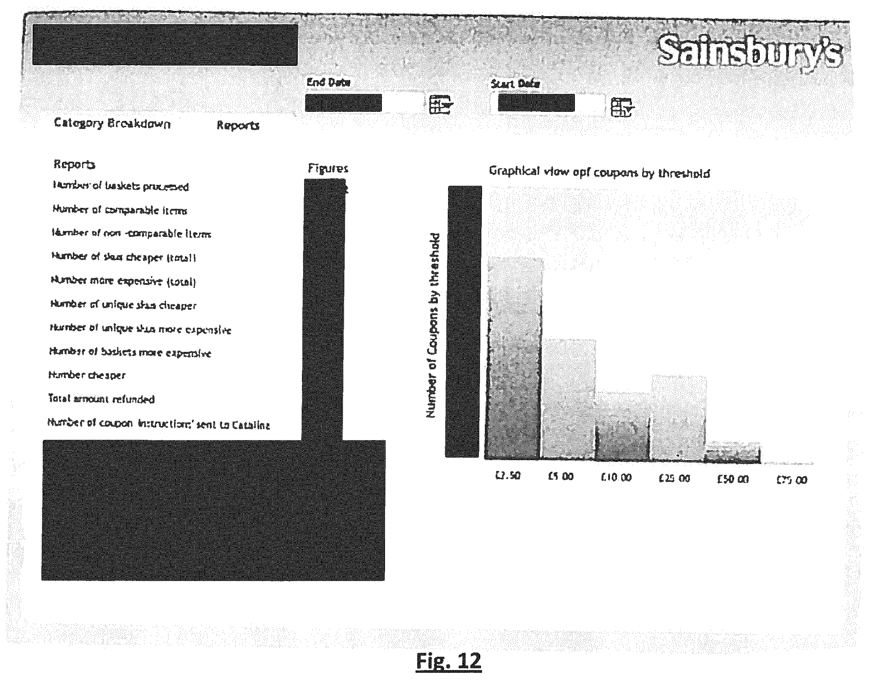

Figure 12 is a screenshot of a reporting function delivered by the MI function 126. The system permits reports on the following:
- number of baskets processed
- number of comparable items
- number of non-comparable items in the baskets that have been processed
- number of SKU's (Stock-keeping Unit) cheaper (total)
- number of SKU's more expensive (total)
- number of unique SKU's cheaper
- number of unique SKU's more expensive
- number of baskets more expensive
- number of baskets cheaper
- total amount refunded
- number of coupon instructions (voucher requests) for refund amounts
- number of coupons sent over certain thresholds (for example, £2.50, £5.00, £10.00, £25.00, £50.00, £75.00)
- number and value of transactions ignored/rounded-up or down because they did not meet minimum/maximum thresholds.

In addition, a graphical view of coupons by threshold is given. The information in the reporting screen shown in Figure 12 allows an administrator to reconfigure the parameters via the configuration website shown in Figure 11 as necessary to ensure proper functioning of the system.

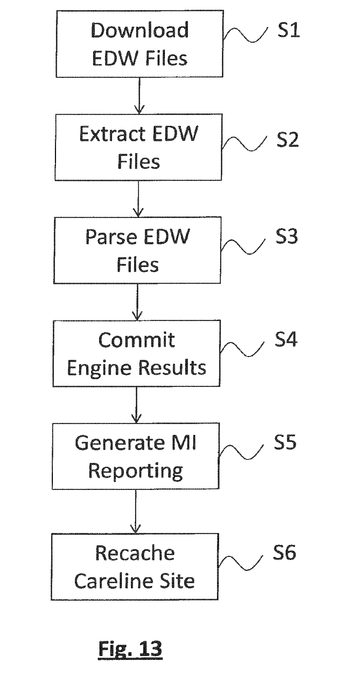

Figure 13 is a schematic diagram illustrating the process flow for batch processing of the EDW data which is transferred to the data centre 46 on a periodic, for example, nightly, basis. The data is processed to establish the price comparison of every transaction in the data file, to provide a failover function. The steps of the process flow are as follows, with an alert to failure at each stage. At step S1 the EDW files are downloaded from the store data centre 118 to the data centre 46.

At step S2, the data files are extracted at the data centre.

At step S3, the extracted files are parsed by the EDW processing service 116, and at step S4, the parsed output result is committed to the EDW data cache 114 as an SQL cluster.

At step S5, data is generated for the MI reports, for example, as shown in Figure 12, and at step S6 the data can be re-cached for the careline function 112.

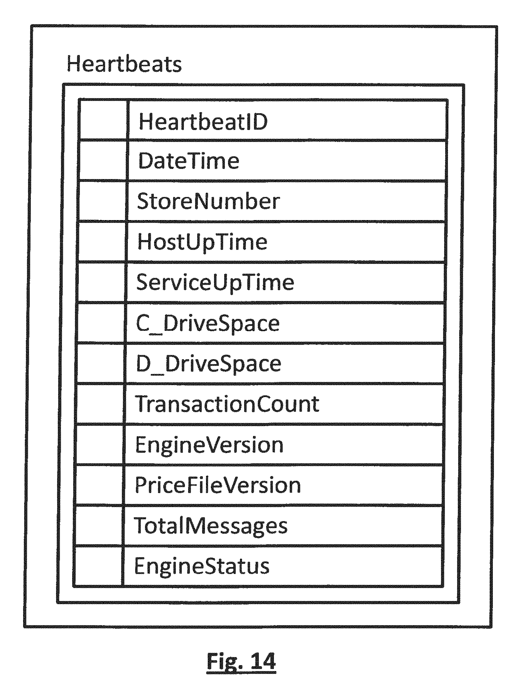

Figure 14 shows the structure of a heartbeat message which is transferred from the updater component 106 to the heartbeat service 108 on a periodic basis. Each heartbeat message includes:
- a heartbeat identifier
- a time stamp (date time)
- a store identifier in the form of a store number
- host uptime
- service uptime
- C_drivespace
- D_drivespace
- transaction count
- engine version
- price file version
- total messages
- engine status

A response to a heartbeat message includes any updated configuration information, any new price file version and any new engine version (price comparison engine) available at the data centre 46.

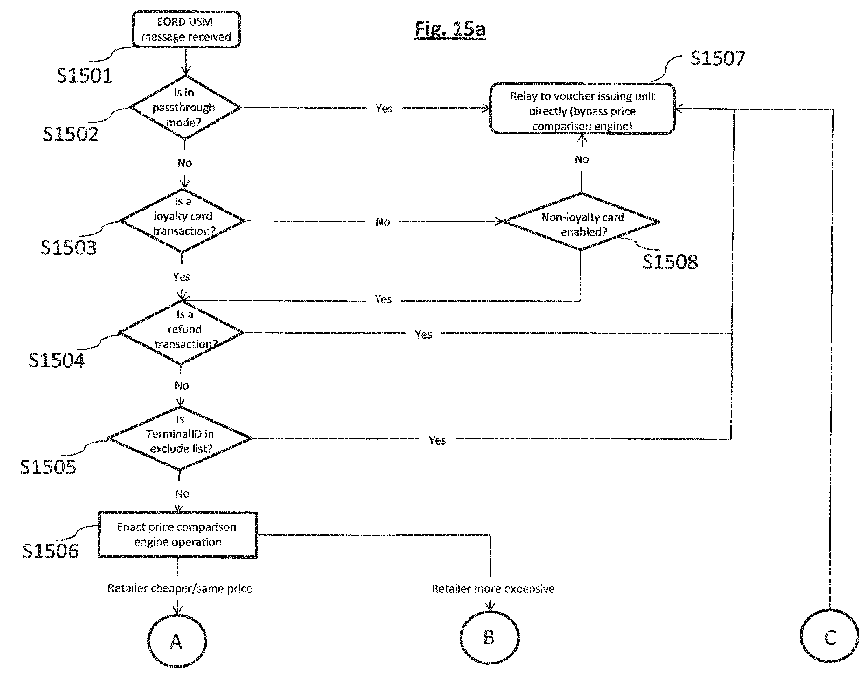

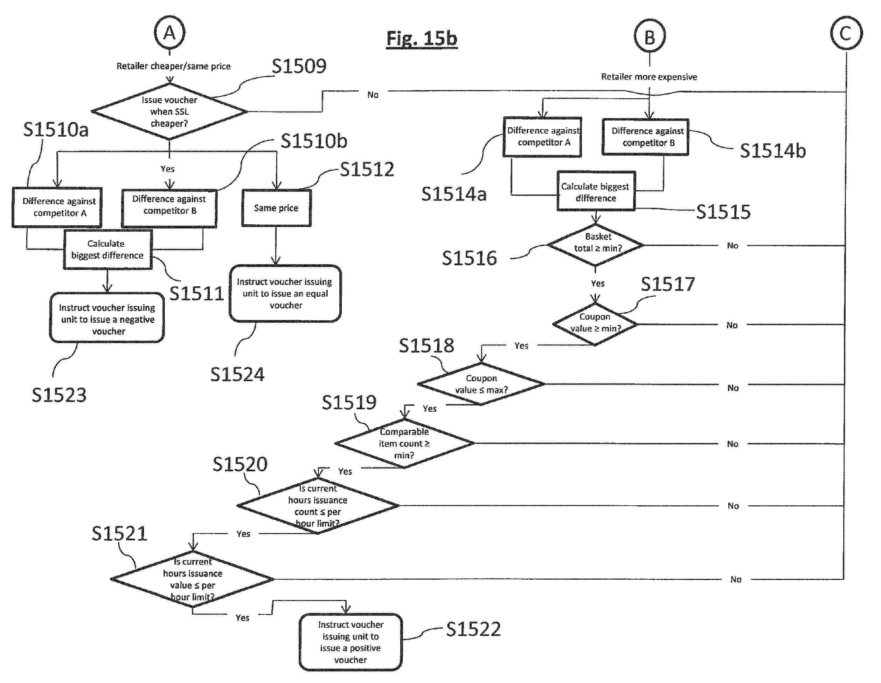

How the application executed at the server 12 compares transactions at a basket level with competitor prices will now be described with reference to Figures 15a and 15b.

At step S1501, an EORD USM (end of transaction message) transaction message is received from the point of sale 10.

The process then proceeds to step S1502 where a determination is made as to whether the application is in a 'passthrough mode' i.e. whether the application is configured to pass the EORD USM transaction message directly to the voucher issuing unit 14 without the price comparison engine 102 performing a price comparison.

If the application is in the 'passthrough mode' then the process proceeds to step S1507. At step S1507 the application relays the EORD USM transaction message directly to the voucher issuing unit 14 (bypassing the price comparison engine 102). The message is processed as it normally would, prompting the issuance of any other coupons to be printed.

If the application is not in the 'passthrough mode' then the process proceeds to step S1503. At step S1503 a determination is made as to whether the customer has provided a loyalty card at the point of sale 10 as part of the transaction: such a determination can be made based on the EORD USM message.

If the customer has not provided a loyalty card at the point of sale 10 as part of the transaction then the process proceeds to step S1508. At step S1508 a determination is made as to whether the application has been configured to enable the price comparison engine 102 to perform a price comparison on transactions for which no customer loyalty card has been provided at the point of sale 10.

If the application has been configured to enable the price comparison engine 102 to perform a price comparison on transactions for which no customer loyalty card has been provided at the point of sale 10 then the process proceeds to step S1504, otherwise the process proceeds to step S1507.

Referring back to step S1503, if the customer has provided a loyalty card at the point of sale 10 as part of the transaction then the process proceeds to step S1504.

At step S1504, a determination is made as to whether the transaction is a refund transaction such a determination can be made based on the EORD USM message. If the transaction is a refund transaction then the process proceeds to step S1507, otherwise the process proceeds to step S1505.

At step S1505, an identifier of the point of sale terminal 10 is extracted from the EORD USM message and the identifier of the point of sale terminal 10 is compared with a list of excluded point of sale identifiers maintained in a database at the server 12, taken from the configuration information. For example, transaction data from a certain point of sale terminal 10 in a retail premises or all point of sale terminals 10 in a certain retail premises may be excluded from being passed to the price comparison engine 102 to perform a price comparison.

If the identifier of the point of sale terminal 10 is present in the list of excluded point of sale identifiers referred to above, then the process proceeds to step S1507, otherwise the process proceeds to step S1506.

At step S1506, the price comparison engine 102 operates to compare price data of the customer's purchased items with price data of comparable items from competitors. Preferably, the price comparison engine 102 compares transactions at a basket level with competitor prices. However, it would be possible in principle to effect the comparison on an item-by-item basis.

If the price comparison engine 102 determines that a basket of customer's purchased items is cheaper or the same price as the competitors then the process proceeds via point A to S1509 (shown in Figure 15b). At step S1509 a determination is made as to whether the application is configured to enable issuance of a voucher when SSL is cheaper.

If the application is not configured to enable issuance of a voucher when SSL is cheaper then the process proceeds via point C to step S1507.

If the application is configured to enable issuance of a voucher when SSL is cheaper then the process proceeds in dependence on whether the customer's purchased items are cheaper or the same price as the competitors.

If the customer's purchased items are cheaper than the competitors, then the price difference between the customer's purchased items and the comparable items from a first competitor (competitor A) is calculated at step S1510a and the price difference between the customer's purchased items and the comparable items from a second competitor (competitor B) is calculated at step S1510b. At step S1511, the results of the calculations carried out at steps S1510a and S1510b are analysed and the largest difference between the customer's purchased items and the comparable items of a competitor (i.e. competitor A or B) is determined. The process then proceeds to step S1523 where the application instructs the voucher issuing unit 14 to issue a negative voucher. The negative voucher indicates the pricing difference calculated at step S1511 thus shows the customer how much they saved in their transaction.

Whilst Figure 15b shows a negative voucher being produced based on a comparison of the customer's purchased items with comparable items of two competitors, it will be appreciated that this is merely an example and price data from any number of competitor's (one or more) may be used.

If the customer's purchased items are the same price as the competitors then the process proceeds via step S1512 to step S1524. At step S1524 the application instructs the voucher issuing unit 14 to issue an equal voucher.

Referring back to step S1506, if the price comparison engine 102 determines that the customer's purchased items are more expensive than the competitors (i.e. a positive difference exists) then the price difference between the customer's purchased items and the comparable items from a first competitor (competitor A) is calculated at step S1514a, and the price difference between the customer's purchased items and the comparable items from a second competitor (competitor B) is calculated at step S1514b. At step S1515, the results of the calculations carried out at steps S1514a and S1514b are analysed and the largest difference between the customer's purchased items and the comparable items of a competitor (i.e. competitor A or B) is determined. The largest difference between the customer's purchased items and the comparable items of a competitor (i.e. Competitor A or B) determined at step S1515 is referred to as a "coupon value" from here on in.

Following the determination of the coupon value at step S1515 the process proceeds to step S1516. At step S1516 the value of the items in the customer's basket iscompared to a predetermined threshold, along with the requirement that the basket contains at least one comparable branded item. If the value of items in the customer's basket is less than the predetermined threshold, or there are no comparable branded items in the basket, then the process proceeds to step S1507. If the value of items in the customer's basket is greater than, or equal to, the predetermined threshold and there is at least one comparable branded item in the customer's basket then the process proceeds to step S1517.

At step S1517 the coupon value is compared to a predetermined threshold . If the coupon value is less than the predetermined threshold then the process proceeds to step S1507. If the coupon value is greater than, or equal to, the predetermined threshold then the process proceeds to step S1518. At step S1518 the coupon value is compared to another predetermined threshold . If the coupon value is greater than the predetermined threshold then the process proceeds to step S1507. If the coupon value is less than, or equal to the predetermined threshold then the process proceeds to step S1519. It will be appreciated that steps S1517 and S1518 may be implemented in a single step to ensure that the coupon value is between an upper and lower threshold rather than two separate steps.

At step S1519 the number of comparable items purchased by the customer is compared to a threshold, this threshold may be set to, for example, one. If the number of comparable items purchased by the customer is less than the threshold, the process proceeds to step S1507. If the number of comparable items purchased by the customer is greater than, or equal to the threshold, then the process proceeds to step S1520.

The application is arranged to monitor the number of times it has instructed the voucher issuing unit to issue a positive voucher within a given time period, for example an hour. At step S1520 the number of times the application has instructed the voucher issuing unit to issue a positive voucher from a certain point in time i.e. on the hour, is compared to a threshold number for a specific time period, for example the threshold may define a number of positive vouchers allowed to be issued per hour. If it is determined at step S1520 that the number of times the application has instructed the voucher issuing unit to issue a positive voucher since the certain point in time is greater than, or equal to the threshold, the process proceeds to step S1507. If it is determined at step S1520 that the number of times the application has instructed the voucher issuing unit to issue a positive voucher is less than the threshold the process proceeds to step S1521.

The application is also arranged to monitor the total monetary value of the positive vouchers that it has instructed the voucher issuing unit to issue within a given time period, for example an hour. At step S1521 the total monetary value of the positive vouchers that it has instructed the voucher issuing unit to issue from a certain point in time i.e. on the hour, is compared to a threshold monetary value for a specific time period, for example the threshold may define a limit of £1000 to be issued by the positive vouchers per hour.

If it is determined at step S1521 that the total monetary value of the positive vouchers that it has instructed the voucher issuing unit to issue since the certain point in time is greater than, or equal to the threshold monetary value the process proceeds to step S1507. If it is determined at step S1521 the total monetary value of the positive vouchers that it has instructed the voucher issuing unit to issue since the certain point in time is less than the threshold monetary value the process proceeds to step S1522.

At step S1522 the application instructs the voucher issuing unit 14 to issue a positive voucher. The positive voucher indicates the coupon value calculated at step S1515. The customer can then use the positive voucher for subsequent transactions in place of money.

Whilst Figure 15b shows a positive voucher being produced based on a comparison of the customer's purchased items with comparable items of two competitors, it will be appreciated that this is merely an example and price data from any number (one or more) of competitor's may be used.

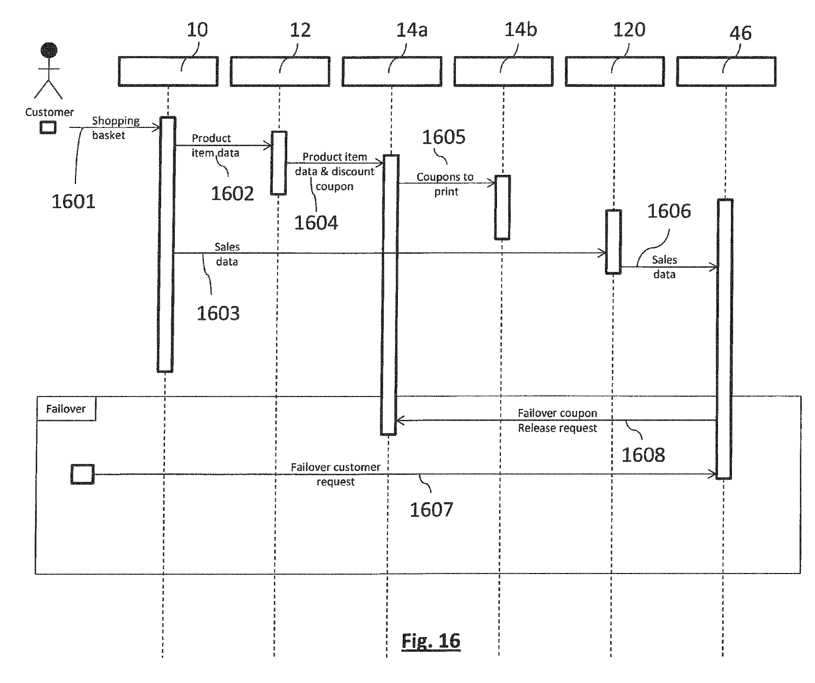

The data flows between the components of the computer system shown in Figure 6 will now be described with reference to Figure 16.

As described above, the point of sale terminal 10 comprises a device for scanning barcodes of products as they are purchased by a customer, the barcode indicating product data including price data. The product data received at the point of sale terminal 10 is represented by data flow 1601.

As items are scanned at the point of sale 10, a UDP USM message 1602 is sent to the server 12. The server 12 passes the UDP USM messages onto the server 14a. When the server 12 receives an EORD USM message the server 14a operates in accordance with Fig.15 and may instruct the server 14a to issue a voucher by way of a UDP USM discount message. The data flow 1604 represents the UDP USM messages and the UDP USM discount message (if applicable) being transmitted to the server 14a.

Responsive to receiving a UDP USM discount message, the server 14a directs the printer 14b to print a voucher based on the UDP USM discount message; this is represented by data flow 1605.

The point of sale terminal 10 supplies sales data (see the dashed arrow in Figure 6) to the EDW database 120, as shown by data flow 1603. It will be appreciated that the EDW database 120 receives sales data from a plurality of retail stores from the points of sale terminals 10 located therein.

The EDW database 120 supplies the sales data to the data centre 46 on a periodic (for example, daily) basis, as shown by data flow 1606. The sales data is received in the data centre by the EDW processing service 116.

As shown in Figure 16 a "failover" mechanism is implemented. A failover customer request is transmitted to the data centre 46, as shown by data flow 1607. In response to receiving the failover customer request the data centre transmits a failover coupon release request to the server 14a to print a voucher.

For example, the failover mechanism can be utilised to allow a coupon to be issued to a customer that has a loyalty card/account in the event of: a printer failure, a software fault and/or a hardware fault.

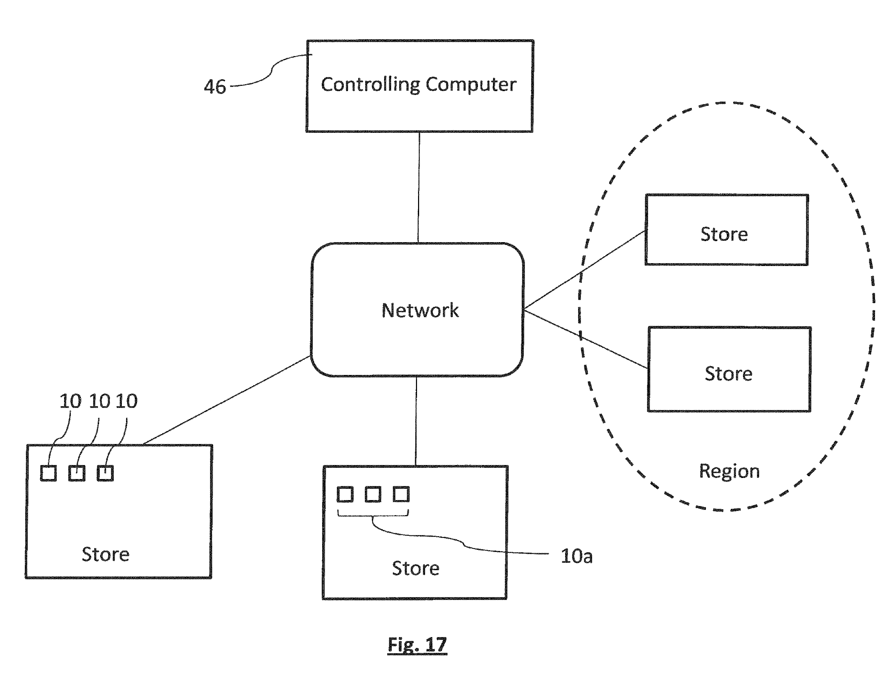

Figure 17 is a schematic block diagram of a network of retail premises (stores) which can be managed by the data centre 46 by the control computer at the data centre. The control computer allows the configuration parameters to be entered as described above and supplied over the network. In addition, the price files can be supplied over the network to stores, settable on a store by store or till by till basis. In particular the configuration parameters and/or price files are settable based on at least one of: a regional location of a retail premises; the type of a retail premises; a specific retail premises; a specific point of sale terminal (10); a group or point of sale terminals (10a); or a type of point of sale terminals 10.

## Claims

1. A server for supporting a point of sale transaction, the server comprising:
an input for receiving from a point of sale terminal transaction details pertaining to a customer and a second input for receiving update information from an update service;
a processing engine arranged to receive the transaction details wherein the transaction details include product data from at least one product, the product data including first price data, including at least a first price for the product, wherein the processing engine is configured to receive second price data from the update information, the second price data pertaining to the at least one product and to compare the first price data with the second price data and issues a voucher request based on the comparison;
an update component configured to issue periodic polling messages, and responsive to at least some of said polling messages to receive said update information at the second input, wherein the update information includes at least one of a price file containing the second price data and a configuration file containing configuration parameters for controlling operation of the processing engine.

2. A server according to claim 1, comprising a storage component arranged to store the second price data.

3. A server according to claim 1 or 2, comprising a configuration storage component arranged to store configuration parameters.

4. A server according to claim 2 or 3, wherein the processing element is configured to operate using configuration data and price data stored in the respective storage units for a time period exceeding an interval between expected update messages when expected update messages are not received.

5. A server according to claim 4, wherein the configuration parameters include a timing parameter which sets the time period.

6. A server according to any of claims 1 to 5 wherein the processing engine is responsive to configuration parameters in the configuration file of at least one of the following type:
a minimum coupon value to prevent issuance of a voucher request where the difference between the first price data and the second price data is less than a minimum value;
a maximum coupon value to prevent issuance of a voucher request where the difference between the first price data and the second price data exceeds a maximum value;
a maximum coupon value per unit time to prevent issuance of voucher requests after a total value of voucher requests issued in that unit time has been reached;
a maximum coupons per unit time to prevent issuance of a further voucher request after a predetermined number of voucher requests have been issued.

7. A server according to any of claims 1 to 6 wherein the processing engine is arranged to compare first price data from multiple items in a customer basket with second price data for corresponding items.

8. A server according to claim 7 wherein the processing engine is responsive to configuration parameters at least of the following type:
a minimum number of items per basket to prevent issuance of a voucher request unless there is a minimum number of items in a customer basket;
a minimum total basket value to prevent issuance of a voucher request unless a total value of items in a customer basket exceeds a minimum value.

9. A server according to any of claims 1 to 8 wherein the processing engine is responsive to configuration parameters at least of the following type:
a non-loyalty card parameter to arrange for the issuance of vouchers in cases where customers do not present a loyalty card;
a pass through mode setting to control whether or not transaction details are supplied to the processing engine or bypass it;
an equal message setting to control whether or not vouchers are printed where the first price data equals the second price data.

10. A computer arranged to control a plurality of retail premises by supplying configuration parameters, each retail premises equipped with an in-store server, the server having an input for receiving transaction details pertaining to a customer from a point of sale terminal, the transaction details including product data from at least one product, the product data including first price data including at least a first price for the product, wherein the server includes a processing engine arranged to receive second price data pertaining to the at least one product from a remote server, compare the first price data with the second price data and issue a voucher request based on the comparison, wherein the voucher request is output to a voucher issuing unit, wherein the processing engine is controlled to operate in accordance with configuration parameters, the control computer having a user interface presenting a plurality of configuration parameter fields wherein configuration parameters can be set by a user such that different configuration parameters are settable for different retail premises at a single user interface and including a status parameter which controls whether or not the processing engine operates to generate voucher requests.

11. A computer according to claim 10 wherein the configuration parameters include a status parameter which controls whether or not the processing engine operates to generate voucher requests.

12. A computer according to claim 10 or 11, comprising a price file update component for generating price files to each retail premises, wherein the price files are settable for different ones of the retail premises.

13. A computer according to claim 10 or 12, wherein the configuration parameters and/or the price files are settable based on at least one of:
a regional location of a retail premises;
the type of a retail premises;
a specific retail premises;
a specific point of sale terminal;
a group of point of sale terminals; and
a type of point of sale terminals.

14. A computer according to claim 10, 11 or 12 wherein the configuration parameter fields are configured to accept a configuration parameter of at least one of the following types:
a minimum coupon value to prevent issuance of a voucher request where the difference between the first price data and the second price data is less than a minimum value;
a maximum coupon value to prevent issuance of a voucher request where the difference between the first price data and the second price data exceeds a maximum value;
a maximum coupon value per unit time to prevent issuance of voucher requests after a total value of voucher requests issued in that unit time has been reached;
a maximum coupons per unit time to prevent issuance of a further voucher request after a predetermined number of voucher requests have been issued;
a minimum number of items per basket to prevent issuance of a voucher request unless there is a minimum number of items in a customer basket;
a minimum total basket value to prevent issuance of a voucher request unless a total value of items in a customer basket exceeds a minimum value;
a non-loyalty card parameter to arrange for the issuance of vouchers in cases where customers do not present a loyalty card;
a pass through mode setting to control whether or not transaction details are supplied to the processing engine or bypass it;
an equal message setting to control whether or not vouchers are printed where the first price data equals the second price data.

15. A method of controlling a plurality of retail premises connected in a network, each retail premises equipped with an in store server, the server having a input for receiving transaction details pertaining to a customer, and at least one point of sale terminal for providing the transaction details to the in store server, the transaction details including product data from at least one product, the product data including first price data including at least a first price for the product, wherein the server includes a processing engine arranged to receive second price data pertaining to the at least one product, compare the first price data with the second price data and issue a voucher request based on the comparison, wherein the voucher request is output to a voucher issuing unit in the retail premises, the method comprising:
receiving at a user interface of a control computer connected to the retail premises over the network at least one configuration parameter set at a first value for a first retail premises and a second value for a second retail premises;
supplying the configuration parameters to the retail premises;
at the retail premises detecting the parameter associated with the retail premise and operating the processing engine in accordance with that parameter.

16. A network of retail premises, each retail premise equipped with an in store server, the server having an input for receiving transaction details pertaining to a customer and at least one point a sale terminal for supplying said transaction details, the transaction details including product data from at least one product, the product data including first price data including at least a first price for the product, wherein the server includes a processing engine arranged to receive second price data pertaining to the at least one product, compare the first price data with the second price data and issue a voucher request based on the comparison, each retail store including a voucher issuing unit for receiving the voucher request and issuing a voucher responsive thereto, wherein the processing engine is controlled to operate in accordance with configuration parameters, the network further comprising a control computer having a user interface presenting a plurality of configuration parameter fields wherein configuration parameters can be set by a user such that different configuration parameters are settable for different retail premises at the user interface, the configuration parameters controlling predetermined conditions controlling whether or not the processing engines operate to generate voucher requests, wherein the control computer is operable to supply the configuration parameters to each of the retail premises.

17. A method according to claim 15 wherein the configuration parameters include a status parameter which controls whether or not the processing engine of each retail premises operates to generate voucher requests in conditions set by the status parameter.

18. A computer system for issuing vouchers, the computer system comprising:
an in-store server located at a retail premises, the server having an input for receiving transaction details pertaining to a customer from a point of sale terminal, the transaction details including product data from at least one product, the product data including first price data including at least a first price for the product, wherein the server includes a processing engine arranged to receive second price data pertaining to the at least one product from a remote server, compare the first price data with the second price data and issue a voucher request based on the comparison, wherein the voucher request is output to a voucher issuing unit; and
a remote server connected to the in-store server over a communication network, the remote server connected to receive transaction details from the point of sale terminal and having a processing component arranged to compare the first price data with the second price data and to generate voucher request data which identifies the nature of vouchers resulting from the comparison of the first price data with the second price data for each customer transaction.

19. A computer system according to claim 18, wherein the in-store server is operable to transmit to the remote service audit data including voucher request data for comparison with the voucher request data generated at the remote server.

20. A computer system according to claim 18, wherein the transaction details include a customer identifier of the customer and wherein said voucher request data includes voucher requests associated with respective customer identifiers.

21. A computer system according to claim 18, wherein the remote server provides a user interface operable to receive a customer identifier, to ascertain from the voucher request data whether a voucher request associated with the customer identifier was effective to generate a voucher, and if it was to generate instructions for a voucher issuing unit located at the retail premises to issue a voucher on detection of that customer identifier in a subsequent transaction.
